# EUROPÄISCHE PATENTSCHRIFT

(11) **EP 2 152 463 B1**
(45) Veröffentlichungstag und Bekanntmachung des Hinweises auf die Patenterteilung: **02.10.2019**
(21) Anmeldenummer: 08758722.6
(22) Anmeldetag: 23.05.2008
(51) Int. Cl.: B23K 26/06

(54) **VERFAHREN ZUR MATERIALBEARBEITUNG MIT LASERSTRAHLUNG SOWIE VORRICHTUNG ZUR DURCHFÜHRUNG DES VERFAHRENS**
METHOD FOR MACHINING MATERIAL USING LASER RADIATION AND APPARATUS FOR CARRYING OUT THE METHOD
PROCÉDÉ D'USINAGE DE MATÉRIAU PAR RAYON LASER ET DISPOSITIF POUR RÉALISER LE PROCÉDÉ

(30) Priorität: 25.05.2007 DE 102007024700
(43) Veröffentlichungstag der Anmeldung: 17.02.2010
(73) Patentinhaber: Fraunhofer-Gesellschaft zur Förderung der angewandten Forschung e.V., 80686 München (DE)
(72) Erfinder: PETRING, Dirk, NL-6462 HE Kerkrade (NL); SCHNEIDER, Frank, 52074 Aachen (DE); SCHULZ, Wolfgang, 52379 Langerwehe (DE); NIESSEN, Markus, 52382 Niederzier (DE)
(74) Vertreter: Grimm, Ekkehard
(86) Internationale Anmeldenummer: PCT/EP2008/004127
(87) Internationale Veröffentlichungsnummer: WO 2008/145305

(56) Entgegenhaltungen:
- EP-A- 0 882 540
- WO-A-03/018246
- WO-A-2004/034132
- DE-A1- 19 503 675
- US-A- 4 997 250

## Beschreibung

Die Erfindung betrifft ein Verfahren zur Materialbearbeitung mit Laserstrahlung, bei dem die unfokussierte Laserstrahlung, die typischerweise kollimiert ist, durch eine Fokussieroptik auf einen kleineren Strahlquerschnitt fokussiert wird, die optische Achse der fokussierten Laserstrahlung, als Strahlachse bezeichnet, auf die Materialoberfläche gerichtet wird, wobei die Strahlachse relativ zum Material ruhend ist oder entlang einer Bearbeitungsbahn bewegt wird, die aus der Fokussierung resultierende Strahltaille der fokussierten Laserstrahlung im Bereich der sich ausbildenden Wechselwirkungsfläche von Laserstrahlung und Material gehalten wird, die Laserstrahlung auf der Wechselwirkungsfläche teilweise absorbiert wird, so dass die Wechselwirkungsfläche durch induzierten Materialabtrag oder induzierte Materialverdrängung und damit auch die Laserstrahlung in das Material eindringt, wobei der Abstand der Strahltaille von der Ober- oder Unterseite der Wechselwirkungsfläche in axialer Richtung maximal dem dreifachen Wert der Eindringtiefe der Wechselwirkungsfläche in das Material entspricht. Die für die Materialbearbeitung eingesetzte Laserstrahlung kann aus einem oder mehreren Strahlen, die mit einer oder mehreren Strahlquellen erzeugt wurden, bestehen.

Weiterhin betrifft die Erfindung eine entsprechende Vorrichtung zur Materialbearbeitung mit Laserstrahlung.

Lasermaterialbearbeitungsverfahren, bei denen die fokussierte Laserstrahlung in das Material eindringt, sind z.B. das Bohren, Abtragen, Schneiden und Schweißen. Während bei den drei erstgenannten Verfahren das Eindringen der Wechselwirkungsoberfläche und damit auch der Laserstrahlung in das Material durch Materialabtrag in Form von Schmelzen, Verdampfen, Sublimieren oder Zersetzen geschieht, wird im Fall des Laserstrahlschweißens eine Dampfkapillare in einem Schmelzbad des Materials erzeugt, die das Schmelzbad verdrängt und durch die der Laser in das Material eindringen kann. Beim Bohren kann das Material evtl. relativ zur Laserstrahlung unbewegt bleiben; die anderen Verfahren nutzen eine Relativbewegung von Laserstrahlung zu Material. Alle genannten Verfahren können durch den Einsatz einer Prozessgasströmung unterstützt werden, die sowohl aus reaktiven als auch aus inerten Gasen bestehen kann und z.B. zum Austrieb von geschmolzenen oder verdampften Materialanteilen oder zur Beeinflussung der Oberflächeneigenschaften der Wechselwirkungsfläche und anliegender Materialbereiche dienen.

Allen oben genannten Verfahren ist gemein, dass die Wechselwirkungsfläche typischerweise ein Schachtverhältnis über 1 besitzt, d. h. der Strahldurchmesser und die Breite der Wechselwirkungsfläche sind kleiner als ihre Eindringtiefe in das Material. Damit kommt nicht nur - wie bei oberflächenbehandelnden Laserverfahren - den Strahlungseigenschaften auf einer allenfalls minimal verformten Materialoberfläche, sondern den Strahlungseigenschaften auf der gesamten sich ausbildenden, in das Material eindringenden Wechselwirkungsfläche über die gesamte Propagationsstrecke der Strahlung zwischen der oberseite der Wechselwirkungsfläche und der Unterseite der Wechselwirkungsfläche hohe Bedeutung zu.

Bisher wurden dazu als wesentliche Strahlungseigenschaften - neben der Strahlungsleistung - der Strahldurchmesser in der Strahltaille, häufig Fokusdurchmesser genannt, und die Rayleighlänge der Strahlung im Taillenbereich, definiert als von der Strahltaille aus gemessen die Strecke entlang der Strahlachse, bis zu der sich die Strahlquerschnittsfläche verdoppelt hat, betrachtet. Daneben wird auch der Einfluss der Leistungsdichtevertei-, lung im Strahlquerschnitt (auch Intensitätsverteilung genannt) insbesondere in der Strahltaille auf das Bearbeitungsergebnis als wichtig erachtet, wenn auch die genauen Auswirkungen der Intensitätsverteilung noch unzureichend bekannt sind. Vollkommen unberücksichtigt ist bisher die Verteilung der Propagationsrichtungen verschiedener Strahlungsanteile in der fokussierten Laserstrahlung und deren Einfluss auf den Wirkungsgrad der Bearbeitung und das Bearbeitungsergebnis.

Es ist bekannt, dass für die Lasermaterialbearbeitung (Beispiel Makro-Anwendungen für den Blechdickenbereich von 1mm bis 30 mm) Hochleistungs-CO₂-Laser (10µ-Strahler) mit einer Wellenlänge der Strahlung von ca. 10 µm und mit einer Laserleistung von 1- 15 kW industriell eingesetzt werden. Darüber hinaus werden auch Stablaser, Faserlaser und Scheibenlaser (1µ-Strahler) mit einer Wellenlänge der Strahlung von ca. 1 µm und mit einer Laserleistung von 1- 8 kW eingesetzt. Gerade diese Strahlquellen bieten wirtschaftliche Vorteile und finden daher zunehmend Verwendung. Allerdings zeigt sich, dass insbesondere beim Schneiden mit Laserstrahlung die erzielbare Bearbeitungsqualität z.B. von der verwendeten Strahlquelle (Faserlaser, Scheibenlaser (1µ-Strahler), Gaslaser 10µ-Strahler) und z.B. von der zu schneidenden Blechdicke und der Verfahrgeschwindigkeit abhängt.

Aktuelle Entwicklungsarbeiten in der Lasermaterialbearbeitung zielen auf eine weitere Steigerung der Bearbeitungsgeschwindigkeit, eine Vergrößerung der erzielbaren Bearbeitungstiefen bzw. der bearbeitbaren Materialdicken, eine Verbesserung der Prozessrobustheit, eine Vermeidung von Prozessinstabilitäten und nicht zuletzt eine weitere Erhöhung der erzielbaren Bearbeitungsqualität. Daher werden zunehmend größere Laserleistungen und Anlagen mit hochwertiger Antriebstechnik in der Fertigung eingeführt. Die Entwicklung zielt darauf, die technischen Begrenzungen der Verfahrensführung zu erweitern.

### Qualität der Bearbeitungsgeometrie am Beispiel Schneiden

Ebenheit und Rechtwinkligkeit sind neben geringer Rauheit und bartfreier Unterseite sowie Oxidfreiheit wesentliche Qualitätsanforderungen an die Schnittkante. Daher sind die folgenden Punkte zu berücksichtigen:
- Auf der Schnittkante entstehen mit zunehmender Blechdicke immer grobere Riefen, die sich insbesondere im unteren Teil der Schnittkante (bzw. Abtragsfuge) zeigen und verstärkt bei zu kleinem Schneidgasdruck, zu schmaler Fuge und zu hoher Schneidgeschwindigkeit auftreten.
- Insbesondere bei kleiner und großer Vorschubgeschwindigkeit löst die Schmelze nicht vollständig von der Unterkante ab. Die anhaftende und dann erstarrende Schmelze bildet den unerwünschten Bart. Die Mechanismen der Entstehung eines solchen Barts sind nur zu einem Teil verstanden. Sie stehen unter anderem im Zusammenhang mit der Riefenbildung.

Aus experimentellen Beobachtungen ist bekannt geworden, dass die unerwünschten, heute nicht vermeidbaren Riefen typischerweise in einem Bereich ab einer bestimmten Abtragstiefe (bzw. Schnitttiefe) von kleinen Werten der Rauhtiefe zu deutlich größeren Werten wechseln können. Dieser Wechsel kann in einem Bereich der Schnitttiefe auftreten, der im Vergleich zur Dicke des Werkstücks klein ist. Dieser Bereich kann während eines Schnittes in wechselnden Tiefen auf der Schnittkante (bzw. Abtragskante) auftreten.

### Absorption der Laserstrahlung

Es ist bekannt, dass die Absorption der Laserstrahlung auf der Wechselwirkungsfläche, die entscheidenden Einfluss auf den Prozesswirkungsgrad hat, nach dem sogenannten Fresnelformalismus berechnet werden kann (Petring, D.: Anwendungsorientierte Modellierung des Laserstrahlschneidens zur rechnergestützten Prozessoptimierung. Verlag Shaker, Aachen 1995, S. 22-29). Der Absorptionsgrad, also der Anteil der absorbierten zur auf die Wechselwirkungsfläche auftreffenden Leistungsdichte der Laserstrahlung ist demnach insbesondere abhängig vom Einfallswinkel zwischen der Laserstrahlung und der Flächennormale im Auftreffpunkt der Wechselwirkungsfläche. Daneben hängt der Absorptionsgrad ab vom Polarisationszustand der Laserstrahlung. In diesen Erläuterungen wird vom typischen Fall einer zirkularen oder statistischen Polarisation ausgegangen. Trotzdem sei angemerkt, dass die Aussagen dieser Druckschrift auch auf andere, z.B. lineare oder radiale Polarisationen übertragbar sind. Neben Einfallswinkel und Polarisation hängt der Absorptionsgrad nur noch vom Brechungsindex des Materials ab, der wiederum von der Werkstofftemperatur und der Laserwellenlänge abhängt.

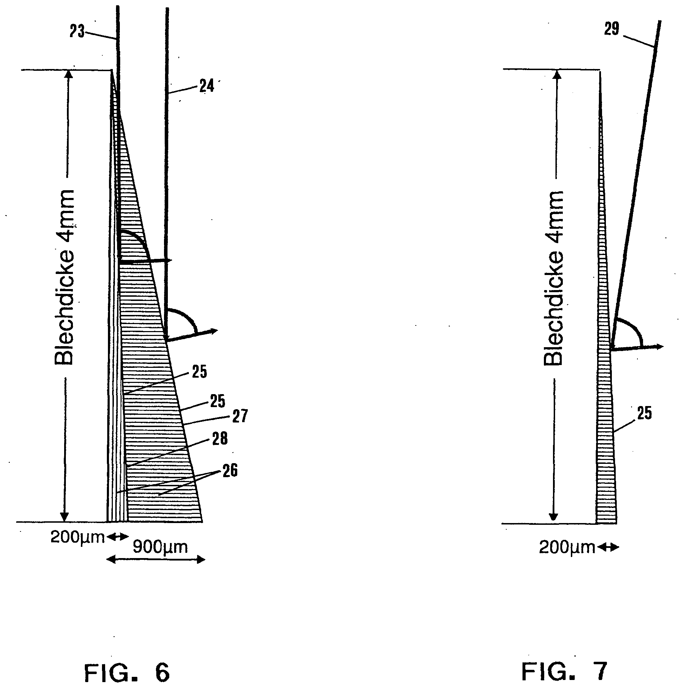

Figur 6 der beigefügten Zeichnung zeigt die Winkelabhängigkeit des Absorptionsgrades für Stahlwerkstoffe und die typischen Laserwellenlängen 1 µm und 10 µm. Es existiert ein jeweils charakteristisches Hauptabsorptionsmaximum. Zur Einstellung des Einfallswinkels auf oder zumindest in die Nähe dieses Maximalwertes wurde bereits die proportionale Anpassung des Taillendurchmessers an die Blechdicke vorgeschlagen (Petring, D.: Anwendungsorientierte Modellierung des Laserstrahlschneidens zur rechnergestützten Prozessoptimierung. Verlag Shaker, Aachen 1995, S. 110-112). Dieser Ansatz zielt vor allem auf einen hohen Prozesswirkungsgrad und hat sich bereits erfolgreich bewährt. Er würde jedoch für den Fall einer Laserwellenlänge von 1 µm bei einer Stahlblechdicke von 4 mm Strahltaillendurchmesser von bis zu 0.9 mm verlangen (siehe Fig. 6), was wiederum zu den in den obigen Punkten bereits genannten Nachteilen großer Strahldurchmesser führt.

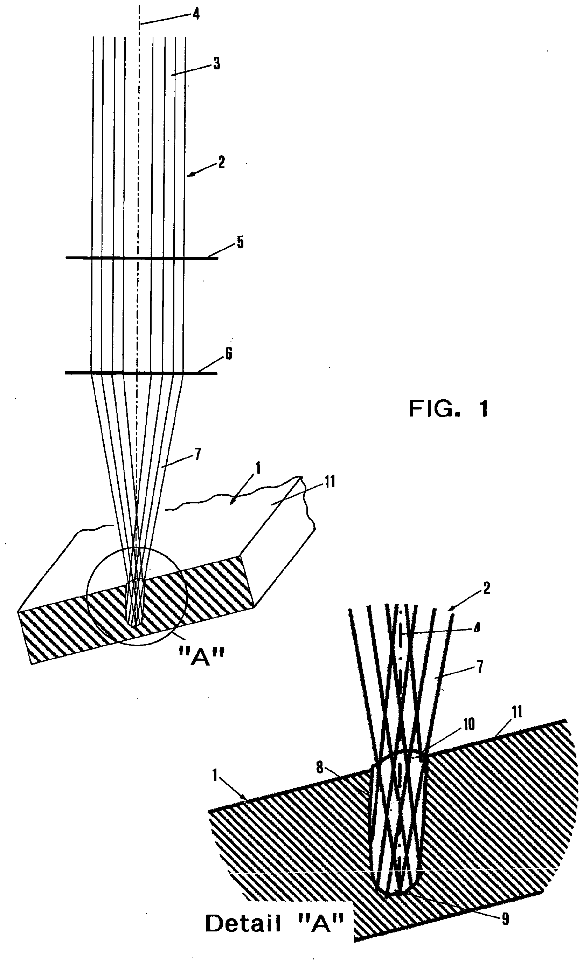

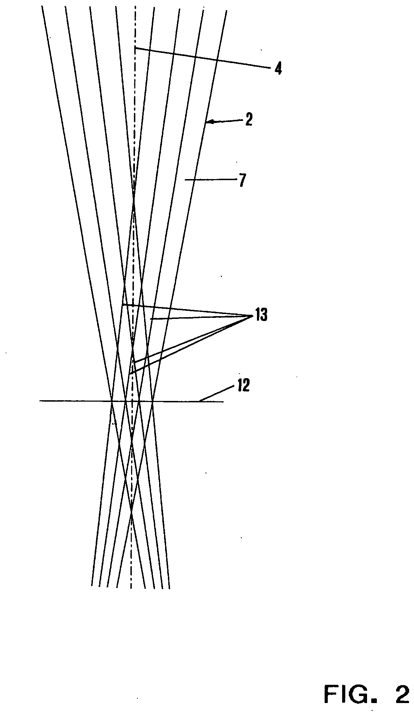

Die WO-A2-2004/34132 beschreibt ein optisches System zum Verbinden von zwei Gegenständen und betrifft somit kein gattungsgemäßes Verfahren, bei dem eine Materialbearbeitung durch einen induzierten Materialabtrag oder eine induzierte Materialverdrängung, wie beispielsweise beim Bohren oder Trennen, erfolgt, Das System umfasst, wie auch die Figuren 1 und 2 zeigen, eine Strahlenquelle, die einen Energiestrahl in Richtung von zwei zu verbindenden Gegenständen abgibt. Der Energiestrahl wird von der Strahlungsquelle zu einem optischen Schalter (alternativ einem Modulator) und von dort über einen optischen Filter sowie eine erste Optik (zum Beispiel eine Linse) und eine zweite Optik (zum Beispiel eine Linse) auf die zu verbindenden Gegenstände in Form eines Strahlungskegels geführt. Bei der Strahlungsquelle handelt es sich um eine polychromatische Lichtquelle, die aufgrund von chromatischen Aberrationen eine Anzahl von Fokuspunkten (und somit eine Tiefe eines Fokus - "a depth of focus") erzeugt. In Figur 1 sind solche Fokuspunkte dargestellt. Die Fokustiefe wird durch die sphärischen Aberrationen des Energiestrahls kontrolliert.

Der vorliegenden Erfindung liegt die Aufgabe zugrunde, ein Verfahren zur Materialbearbeitung, bei dem die Laserstrahlung auf der Wechselwirkungsfläche teilweise absorbiert wird, so dass die Wechselwirkungsfläche durch induzierten Materialabtrag oder induzierte Materialverdrängung und damit auch die Laserstrahlung in das Material eindringt anzugeben, mit dem der Prozesswirkungsgrad und die Prozessstabilität sowie insbesondere die daraus resultierende Bearbeitungsqualität über die heutigen Grenzen des Standes der Technik hinaus verbessert werden kann. Am Beispiel des Laserschneidens ist nach dem Stand der Technik bekannt, dass die unsachgemäße Einstellung von Schneidparametern eine unnötig starke Zunahme der Riefenamplitude mit der Abtragstiefe bewirken kann. Beispiele sind ein zu kleiner Gasdruck, eine zu schmale Abtragsfuge (z.B. beim Feinschneiden) oder eine zu große Verfahrgeschwindigkeit. Die zentrale Aufgabe besteht also darin, die Bildung von Riefen mit unnötig großer Amplitude zu vermeiden, die selbst nach sachgemäßer Anwendung der bekannten Maßnahmen nicht mehr verkleinert werden kann. Die Aufgabenstellung wird durch eine überraschende Beobachtung der Erfinder anhand des Stands der Technik begründet: bei der Anwendung von ausgewählten Strahlquellen zum Laserschneiden, wie z.B. dem 1µ-Strahler (Faserlaser, Scheibenlaser etc.), oder beim Schneiden großer Werkstückdicken treten große Riefenamplituden auf, die mit den bekannten Maßnahmen nicht vermieden werden können. Auch der bekannte Stand der Forschung gibt keinen erklärenden Hinweis darauf, welche Ursachen bzw. welcher Mechanismus die unerwünscht großen Riefenamplituden bewirkt. Außerdem ist nicht bekannt, wie die Absorption erhöht werden kann und gleichzeitig zu breite Wechselwirkungsflachen vermieden werden können.

Diese Aufgaben werden bei einem Verfahren der eingangs angegebenen Art dadurch gelöst, dass die Fokussierung derart erfolgt, dass Anteile der Laserstrahlung nicht nur in Ausbreitungsrichtung nach der Strahltaille sondern auch in der Strahltaille und/oder auch in Ausbreitungsrichtung vor der Strahltaille divergent gemacht und somit von der Strahlachse weg gerichtet werden, und dass diese Anteile und Divergenzwinkel größer als diejenigen der Auswirkungen von Abbildungsfehlern sind, die mit Standardoptiken unbeabsichtigt entstehen und in Kauf genommen werden, wobei die größeren Divergenzwinkel der Strahlungsanteile zur Verkleinerung ihrer Einfallswinkel auf der Wechselwirkungsfläche und damit zur Erhöhung der Absorption der Strahlungsanteile auf der Wechselwirkungsfläche und zur Reduzierung der Änderung der Absorption bei Einfallswinkelschwankungen genutzt werden.

Vorrichtungsgemäß wird die Aufgabe durch eine Vorrichtung zur Materialbearbeitung mit mindestens einer Laserstrahlquelle und einer die Laserstrahlung der Laserstrahlquelle fokussierende Fokussieroptik, wobei die optische Achse der fokussierten Laserstrahlung, als Strahlachse bezeichnet, auf eine Bearbeitungsebene gerichtet ist, wobei die aus der Fokussierung resultierende Strahltaille der fokussierten Laserstrahlung im Bereich der sich ausbildenden Wechselwirkungsfläche von Laserstrahlung und zu bearbeitendem Material gehalten ist, und mit Einrichtungen, um die aus der Fokussierung resultierende Strahltaille der fokussierten Laserstrahlung im Bereich der sich ausbildenden Wechselwirkungsfläche von Laserstrahlung und Material zu halten, die dadurch gekennzeichnet ist, dass die Fokussieroptik und eine strahlformende Optik derart ausgelegt sind, dass Anteile der Laserstrahlung nicht nur in Ausbreitungsrichtung nach der Strahltaille sondern auch in der Strahltaille und/oder auch in Ausbreitungsrichtung vor der Strahltaille divergent und somit von der Strahlachse weg gerichtet sind, und derart, dass diese Anteile und Divergenzwinkel größer als diejenigen der Auswirkungen von Abbildungsfehlern sind, die mit Standardoptiken entstehen und in Kauf genommen werden.

Abbildungsfehler von Standardoptiken, wie sie hier angegeben sind, beziehen sich auf solche Abbildungsfehler, die unbeabsichtigt, d. h. nicht gewollt, mit den typischerweise eingesetzten Standardoptiken entstehen und bei solchen Standardoptiken in Kauf genommen werden.

Mit dem erfindungsgemäßen Verfahren und der erfindungsgemäßen Vorrichtung kann die Grundabsorption der Laserstrahlung, also die Absorption ohne Berücksichtigung der Absorptionsanteile durch Mehrfachreflexion, erhöht werden, und zwar selbst auf Wechselwirkungsflächen mit großem Schachtverhältnis Tiefe zu Breite (Schneidfronten, Bohrkanäle, Schweißkapillaren), d. h. auf steilen Wechselwirkungsflächen, da die dazu erforderlichen kleineren Einfallswinkel durch die größeren Divergenzwinkel ermöglicht werden. Die Fresnelabsorption erreicht erst bei vergleichsweise kleinen Einfallswinkeln (z.B. bei 1µm Wellenlänge und Stahl: <80°) ihr Maximum und wird daher von flacheren Wechselwirkungsflächen begünstigt.

Bei den kleineren Einfallswinkeln erfolgt auch eine Reduzierung von Änderungen der Absorption bei Änderungen von Form und/oder Lage der Wechselwirkungsfläche und damit bei Änderungen des Einfallswinkels, so dass eine Erzeugung oder Verstärkung von Instabilitäten im Bearbeitungsprozess vermieden wird. Reflexionen von selbst nur leicht instabilen Auftreffpunkten im oberen Bereich der Wechselwirkungsfläche führen nämlich zu verstärkten Instabilitäten in nachfolgenden Auftreffpunkten der reflektierten Strahlungsanteile. Dieses Problem wird durch Minderung der Reflexion durch die erhöhte Absorption bei kleineren Einfallswinkeln sowie durch die geringere Winkelabhängigkeit der Absorption bei kleineren Einfallswinkeln gelöst. Dadurch wird auf zweifache Weise eine Verstärkung instabiler Prozesse bei der Bearbeitung vermieden bzw. unterdrückt.

Von Vorteil ist auch die Reduzierung des Anteils der Mehrfachreflexionen durch eine erhöhte direkte Absorption im ersten Auftreffpunkt der jeweiligen Teilstrahlen, wodurch verstärkte Instabilitäten vermieden werden können. Schließlich können konische oder abgerundete Bearbeitungsquerschnitte, z.B. bei Schnittfugen und Bohrungen, vermieden werden, da die Strahlungsanteile mit größeren Divergenzwinkeln bereits ab der Oberseite der Wechselwirkungsfläche im Randbereich der Laserstrahlung selbst bei im Randbereich niedrigeren Leistungsdichten als im Strahlzentrum einen vergleichsweise steilen Übergang von der Materialoberfläche in die Wechselwirkungsfläche bewirken.

Die Problemstellung, die der Erfindung zu Grunde liegt, ist im bekannten Stand der Technik bisher unbehandelt. Gleiches gilt für die erfindungsgemäße Lösung.

Die Erfinder sind zu folgenden Erkenntnissen gelangt:
Bei Bearbeitungsverfahren, bei denen die Laserstrahlung durch Aufschmelzen, Verdampfen, Sublimieren oder Zersetzen des Materials in das zu bearbeitende Material eindringt, also zum Beispiel Bohren, Abtragen, Schneiden, Schweißen, trifft die Laserstrahlung typischerweise mit einem großen Winkel zwischen dem Normalenvektor der Wechselwirkungsoberfläche und der lokalen Ausbreitungsrichtung der Strahlung auf (streifender Einfall). Da die Absorption der Laserstrahlung unter anderem stark vom diesem Winkel abhängt, lässt sich material- und wellenlängenabhängig durch die gezielte Einstellung dieses Winkels die Absorption steigern und ein Winkelbereich einstellen, der sich bei in der Bearbeitung unvermeidlichen Schwankungen der geometrischen Verhältnisse stabilisierend auf den weiteren Bearbeitungsverlauf auswirkt. Insbesondere für die Bearbeitung von Stahlwerkstoffen mit Laserstrahlung im Wellenlängenbereich vom Sichtbaren und nahen Infraroten wirkt sich eine Verkleinerung des Winkels absorptionssteigernd und stabilisierend aus. Beide Effekte steigern die Leistungsfähigkeit des Verfahrens, messbar z. B. in der Bearbeitungsgeschwindigkeit und/oder der Bearbeitungsqualität.

Bei den für die Erfindung relevanten Bearbeitungsverfahren liegen typischerweise geometrische Verhältnisse vor, bei denen der Querschnitt des Laserstrahls am Ort der Wechselwirkung mit dem Material deutlich kleiner ist als die Bearbeitungstiefe in Ausbreitungsrichtung des Strahls (großes Schachtverhältnis). Mit dem vorgeschlagenen Verfahren ist es möglich, insbesondere bei Bearbeitungsverfahren mit einer Relativbewegung zwischen der Strahlachse und dem Werkstück, auch bei einem großen Schachtverhältnis durch einen in Ausbreitungsrichtung vergrößerten Bereich mit divergenten Strahlungsanteilen, der divergente Anteile auch über und/oder in der Strahltaille einschließt, die gewünschten kleinen Winkel einzustellen.

Zur Leistungssteigerung der Bearbeitungsverfahren wird nach dem Stand der Technik üblicherweise das optische System bestehend aus kollimierten Laserstrahl und Fokussieroptik so dimensioniert, dass ein möglichst kleiner Fokus in Verbindung mit einer für die zu bearbeitende Materialdicke geeigneten Rayleighlänge zur Verfügung steht. Die zum Einsatz kommenden Optiken sind in der Regel daher so korrigiert, dass Abbildungsfehler minimiert sind. Der Einsatz von Laserstrahlung mit hoher Strahlqualität vereinfacht die Erzeugung eines kleinen Fokus mit großer Rayleiglänge. Dieses Vorgehen führt aber dazu, dass mit den resultierenden schlanken Kaustiken gerade besonders wenig Strahlungsanteile divergent auf die Wechselwirkungsfläche treffen. Mit der nach der Erfindung vorgeschlagenen Vorgehensweise werden hingegen divergente Strahlanteile auf die Wechselwirkungsfläche treffen. Im Gegensatz zum Stand der Technik wird also nicht eine Verbesserung sondern eine Verschlechterung der Abbildungsqualität empfohlen und durch die spezielle Art der Ausführung der Verschlechterung der Abbildungsqualität wird ein vorteilhaftes Prozessverhalten z. B. hinsichtlich Geschwindigkeit und/oder Bearbeitungsqualität erzielt.

Die erfindungsgemäße Lösung erzeugt und nutzt bewusst divergente Strahlanteile in der Strahltaille, um trotz einer schmalen Wechselwirkungsfläche (Front, Bohrung, Kapillare) kleinere Einfallswinkel, eine für den Anwendungsfall damit größere Grundabsorption und geringere Mehrfachreflexionen sowie steilere Wechselwirkungsflächen zu erreichen, und zwar ohne Verrundung und Anschrägung der Bearbeitungsflanken. Als Zusatzeffekt kann eine Umverteilung der Leistungsdichte im Strahlquerschnitt z.B. in Form steilerer Flanken einer ringförmigen Leistungsdichteverteilung eingestellt und genutzt werden.

Zur Erzeugung der divergenten Strahlanteile oberhalb undfoder in der Strahltaille wird mindestens eine strahlformende Optik eingesetzt. Diese strahlformende Optik kann vor oder nach der Fokussieroptik angeordnet sein oder die strahlformende Optik kann gleichzeitig auch zur Kollimation und/oder die Fokussierung der Laserstrahlung genutzt werden.

Die größeren Divergenzwinkel der Strahlungsanteile werden zur Verkleinerung ihrer Einfallswinkel auf der Wechselwirkungsfläche und damit zur Erhöhung der Absorption der Strahlungsanteile auf der Wechselwirkungsfläche und zur Reduzierung der Änderung der Absorption bei Einfallswinkelschwankungen genutzt, wodurch die bereits weiter oben erläuterten Wirkungen erzielt werden.

Um kleinere Einfsallswinkel auf der Wechselwirkungsfläche zu erreichen, werden zusätzliche divergente Strahlanteile laserintern oder laserextern mit mindestens einer strahlformenden Optik erzeugt. Solche divergenten Strahlanteile können auch dadurch erzeugt werden, dass der Betrag einer Aberration in der strahlformenden Optik erzeugt oder vergrößert wird.

Für eine Verkleinerung der Einfallswinkel können positive oder negative sphärische Aberrationen oder chromatische Aberrationen erzeugt oder betragsmäßig vergrößert werden. Vorteilhaft sind negative Aberrationen, die mit stark überkorrigierten Optiken erzeugt werden können. Im Fall negativer Aberration werden die zentralen Strahlanteile bereits vor der Strahltaille divergent und insgesamt erzeugen mehr Strahlungsanteile im Bereich und unter der Strahltaille auf der in das Material eindringenden Wechselwirkungsfläche kleinere Einfallswinkel. Das gilt insbesondere für Verfahren wie das Schneiden und Abtragen, da bei derartigen Verfahren in Vorschubrichtung hinter der Strahlachse, also auf der vom Scheitel der Wechselwirkungsfläche bzw. -front abgewandten Seite, mehr Strahlungsanteile eine längere Strecke ungestört ins Material propagieren können, bevor sie das erstemal die Wechselwirkungsfläche treffen.

Für den in der Lasermaterialbearbeitung häufigen Fall monochromatischer Strahlung kommt die sphärische Aberration zum Einsatz. Bei Strahlquellen, bei denen die Strahlung durch Überlagerung mehrerer einzelner Strahlquellen mit unterschiedlichen Wellenlängen gebildet wird (z. B. einige Bauformen von Diodenlasern) oder bei Lasern, die breitbandig emittieren, kann die chromatische Aberration alleine oder in Kombination mit der sphärischen Aberration eingesetzt werden.

Für die Erzeugung einer Aberration in der Optik können diffraktive, refraktive und/oder diffusive optische Elemente eingesetzt werden. Von diesen Optiken sind refraktive optische Elemente dann zu bevorzugen, wenn die optischen Elemente mit hohen Laserstrahlintensitäten (> Größenordnung 1 kW/cm²) beaufschlagt werden. Die optischen Elemente können aus festen, flüssigen und/oder gasförmigen Werkstoffen oder Medien mit transmittierenden und/oder reflektierenden Eigenschaften eingesetzt werden, beispielsweise in Form von Linsen, Spiegeln, Fasern und Hohlleitern. Von den vorstehend angegebenen Werkstoffen sollten feste Werkstoffe hervorgehoben werden, da mit der Verwendung von Linsen und Spiegeln die in der Lasermaterialbearbeitung bei weitem gebräuchlichsten Ausführungsformen erfasst werden. Flüssige und gasförmige Medien bieten neue Möglichkeiten der Strahlformung durch flexiblere und dynamische Einstellbarkeit der optischen Eigenschaften; dies gilt insbesondere dann, wenn die strahlformende Optik als adaptive Optik derart ausgeführt wird, dass der Betrag und/oder die laterale und/oder die axiale Verteilung der Aberration einstellbar ist/sind.

Eine Aberration in der Optik kann auch dadurch erreicht werden, dass die Kombination aus mindestens einer konkaven und einer konvexen optischen Grenzfläche eingesetzt wird, was dann von Vorteil ist, wenn z. B. durch die Kombination von einer Konkav- und Konvexlinse eine durch eine Standard-Fokussieroptik erzeugte positive sphärische Aberration nicht wie üblich auf minimale Aberration korrigiert wird, sondern zu negativen sphärischen Aberrationen überkorrigiert wird. Auch bei der Verwendung bereits korrigierter Fokussieroptiken wird durch die Kombination mit einer Konkav- und Konvexlinse vorteilhaft der Betrag der Aberration vergrößert. Mit der eine Aberration erreichenden Optik wird bevorzugt gleichzeitig die Kollimation und/oder die Fokussierung der Laserstrahlung durchgeführt, so dass das optische System ggf. mit einer geringeren Anzahl optischer Elemente realisiert werden kann, kleiner baut oder justageunempfindlicher wird.

Eine Aberration in der Optik kann dadurch erreicht werden, dass mindestens ein optisches Element mit mindestens einer asphärischen Fläche eingesetzt wird; ein solches optisches Element kann als Axikon oder als Fresneloptik ausgeführt werden. Ein Axikon oder eine Fresneloptik sind dann zu bevorzugen, wenn eine deutliche Umverteilung der Strahlung erfolgen soll, beispielsweise um achsnahe Anteile der Strahlung mit kleinen Divergenzwinkeln zu unterdrücken.

Wenn eine Optik mit wenig optischen Elementen oder konventionell schwer erzeugbaren Abbildungseigenschaften genutzt werden soll, also z.B. zur flexiblen Einstellung der Verteilung der Divergenzwinkel (Poyntingvektoren) und gleichzeitigen Einstellung der Intensitätsverteilung in axialer und lateraler Richtung, sollte eine Aberration in der Optik durch mindestens ein optisches Element mit lateral und/oder axial variierendem Brechungsindex erzeugt werden.

Die strahlformende Optik kann als adaptive Optik durch Verschiebung und/oder Verformung der optischen Elemente derart ausgeführt werden, dass der Betrag und/oder die laterale und/oder axiale Verteilung der Aberration einstellbar ist/sind. Solche Einstellungen können zur Anpassung an die Verfahrensparameter, wie Materialart, Materialdicke, Bearbeitungsgeschwindigkeit und/oder Laserleistung, vor und/oder während der Bearbeitung, gesteuert oder geregelt werden.

Die Einstellung der Divergenzwinkel z. B. durch sphärische Aberration kann zusätzlich genutzt werden, um mit der strahlformenden Optik die Erzeugung definierter räumlicher Leistungsdichteverteilungen z. B. als Ring- oder Tophat-Verteilung im Bereich der Wechselwirkungsfläche zu erreichen. Dies wird vorteilhaft besonders dann durchgeführt, wenn auf Grund der Geometrie der Wechselwirkungsfläche nicht nur die Divergenz der auf die Wechselwirkungsfläche lokal auftreffenden Strahlungsanteile eingestellt werden muss, sondern auch die lokale Leistungsdichte. Beispielsweise ist beim Schneiden die Leistungsdichte im obersten Teil der Wechselwirkungsfläche so einzustellen, dass bei der Absorption, die mit dem eingestellten Divergenzwinkel vorliegt, eine Verrundung der Schnittkanten vermieden wird.

Vorteilhafte Ausgestaltungen der vorstehend angegebenen, erfindungsgemäßen Vorrichtung ergeben sich aus den abhängigen Vorrichtungsansprüchen.

Weitere Einzelheiten und Merkmale der Erfindung ergeben sich aus der nachfolgenden Beschreibung von Ausführungsbeispielen anhand der Zeichnung. In der Zeichnung zeigt:
- Figur 1: schematisch ein Materialteil im Schnitt sowie den Verlauf der Laserstrahlung, wobei der Bereich der Wechselwirkungsfläche von Laserstrahlung und Material in einer vergrößerten Darstellung, mit Detail "A" bezeichnet, dargestellt ist,
- Figur 2: eine vergrößerte Darstellung des Strahlungsverlaufs im Bereich der Strahltaille, um die divergenten Strahlungsanteile zu zeigen,
- Figur 3: eine schematische Darstellung eines Bereichs einer erfindungsgemäßen Vorrichtung mit den wesentlichen optischen Komponenten, wobei das Detail "B" vergrößert dargestellt ist,
- Figur 4: einen gegenüber der Figur 3 geänderten Aufbau der Vorrichtung, bei dem Axikons eingesetzt sind,
- Figur 5: ein Diagramm, um den Absorptionsgrad von Strahlungen mit den Wellenlängen λ von 1µm und 10µm als Funktion des Einfallswinkels, berechnet für Stahlwerkstoffe, zu zeigen,
- Figur 6: ein Beispiel zur Einstellung des Einfallswinkels nahe dem Hauptabsorptionsmaximum mit einem Einfallswinkel von 78°für 1µm-Laserstrahlung und einem Einfallswinkel von 87° für 10µm-Laserstrahlung, jeweils ohne Strahldivergenz, und
- Figur 7: eine der Figur 6 entsprechende Darstellung mit einem Einfallswinkel von 78° für 1µm-Laserstrahlung, allerdings mit einer Strahldivergenz von 12°.

Figur 1 zeigt ein Werkstück bzw. Material 1, das mit Laserstrahlung 2 bearbeitet wird. Die unfokussierte Laserstrahlung 3, deren optische Achse (Strahlachse) mit 4 bezeichnet ist, wird zunächst durch eine strahlformende Optik 5 und dann durch eine fokussierende Optik (Fokussieroptik) 6 geführt. Die fokussierte Strahlung 7 trifft dann auf das Werkstück bzw. Material 1 auf. Es bildet sich, wie in einer vergrößerten Darstellung das Detail "A" zeigt, zwischen Laserstrahlung 2 und Material eine Wechselwirkungsfläche, mit dem Bezugszeichen 8 bezeichnet, aus, wobei die Unterseite 9 dieser Wechselwirkungsfläche hier im Werkstück bzw. Material liegt, aber natürlich auch an einer Werkstück- bzw. Materialunterseite liegen könnte, während sich die Oberseite 10 dieser Wechselwirkungsfläche an der Materialoberfläche 11 befindet.

Wie Figur 1 zeigt, aber auch anhand der Figur 2 noch besser zu sehen ist, wird die Strahlformung mit der strahlformenden Optik 5 so vorgenommen, dass die Fokussieroptik 6 die Laserstrahlung so fokussiert, dass sie sowohl in Ausbreitungsrichtung nach der Strahltaille, die in Figur 2 mit dem Bezugszeichen 12 bezeichnet ist, als auch in der Strahltaille 12 selbst und insbesondere vor der Strahltaille divergent gemacht wird, so dass die Laserstrahlung 2 von der Strahlachse 4 weg gerichtet wird. Die Ausbreitungsrichtung der divergenten Strahlanteile vor der Strahltaille ist in Figur 2 mit dem Bezugszeichen 13 angegeben. Diese Strahlanteile und die Divergenzwinkel davon werden so ausgelegt, dass sie größer als diejenigen Strahlungsanteile und Divergenzwinkel sind, die aus Abbildungsfehlern der Fokussieroptik 6 entstehen und nicht beabsichtigt sind, d. h. die den eingesetzten Standardoptiken bauteilspezifisch zuzuschreiben sind.

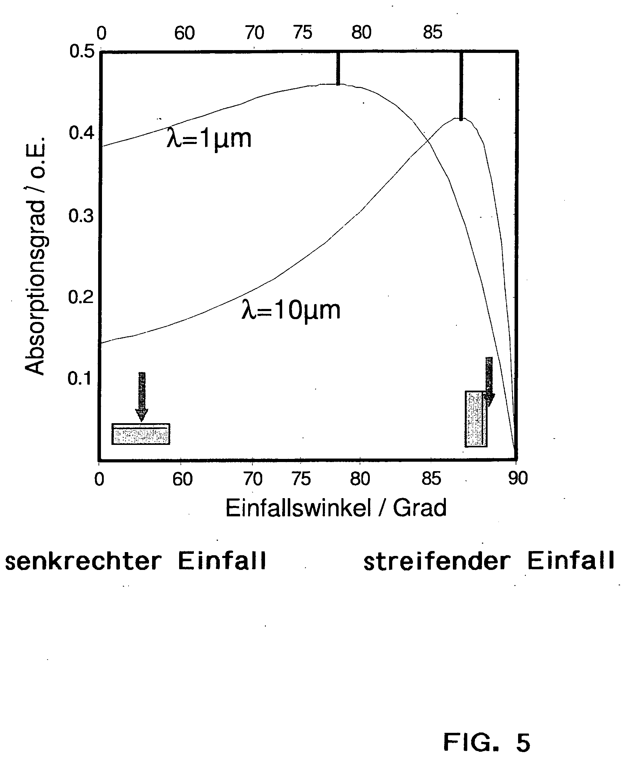

Die größeren Divergenzwinkel der Strahlungsanteile werden zur Verkleinerung ihrer Einfallswinkel auf der Wechselwirkungsfläche 10 ausgenutzt, so dass dadurch eine erhöhte Absorption der Strahlungsanteile der Strahlung 2 im Bereich der Wechselwirkungsfläche 8 genutzt wird. Diese größeren Divergenzwinkel werden auch zur Verringerung der Änderung der Absorption bei Schwankungen der Einfallswinkel genutzt, da bei kleinen Einfalsswinkeln die Änderung der Absorption mit sich änderndem Einfallswinkel geringer wird, was noch näher nachfolgend anhand der Figuren 5 bis 7 erläutert wird.

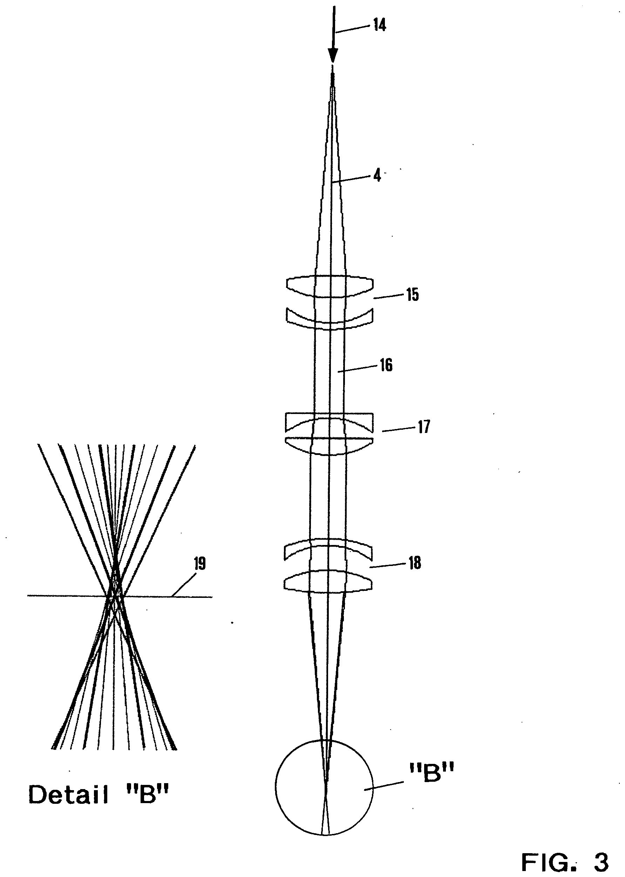

Figur 3 zeigt schematisch den Gesamtaufbau einer Vorrichtung, um das beschriebene erfindungsgemäße Verfahren durchzuführen.

Die Vorrichtung umfasst als Strahlquelle optional einen Laser mit fasergeführter Laserstrahlung, allgemein mit dem Pfeil 14 bezeichnet. Die von dem Laser bzw. der Faseroptik abgegebene Strahlung, wobei die Strahlachse, wie in den Figuren 1 und 2, mit dem Bezugszeichen 4 bezeichnet ist, wird über eine Kollimationsoptik 15 kollimiert und der kollimierte Laserstrahl 16 wird einer Aberrationsoptik 17, die in der gezeigten Ausführungsform aus konkav-konvexen Optiken zusammengesetzt ist, zugeführt.

Die von der Aberrationsoptik 17 abgegebene Strahlung wird dann über eine Fokussieroptik 18 auf ein nicht näher dargestelltes Werkstück bzw. Material fokussiert, wobei der Fokussierbereich vergrößert als Detail "B" dargestellt ist. Anhand dieses Details "B" ist die Strahltaille mit aberriertem Strahl um eine angedeutete Ebene 19 herum zu erkennen, vergleichbar mit der Darstellung der Figur 2.

Diese Kollimations- und Fokussieroptiken 15, 18 können als ein- oder mehrlinsige Systeme ausgeführt werden. Auch kann die Aberrationsoptik 17 aus anderen Kombinationen von Konkav- und Konvexflächen ausgeführt werden und transmissive Optiken könnten auch durch reflektive und/oder diffraktive, aber auch durch diffusive Optiken, ersetzt werden. Auch ist es möglich, Fokussieroptik 18 und/oder Kollimationsoptik 15 und Aberrationsoptik 17 in ein oder zwei optische Systeme zusammenzulegen.

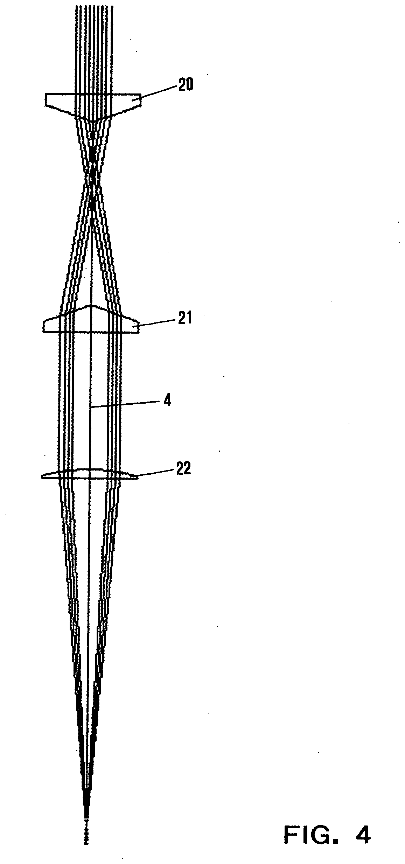

Figur 4 zeigt eine Ausführung, bei der die Aberrationsoptik 17 der Figur 3 durch zwei Axikons 20, 21 aufgebaut ist. Diese Axikons 20, 21 besitzen gleiche Winkel der Mantelflächen, die zueinander hinweisend orientiert sind. Die Fokussieroptik 22 der Figur 4 ist durch eine einzelne Linse schematisch dargestellt.

Die Axikons 20, 21 der Aberrationsoptik der Figur 4 können gleiche oder ungleiche Winkel der Mantelflächen oder getauschte Orientierungen bezüglich der Ausbreitungsrichtung der Laserstrahlung haben. Auch können ein Axikon oder mehr als zwei Axikons eingesetzt werden. Weiterhin können Axikons verwendet werden, die gekrümmte Flächen besitzen, oder auch solche, die als reflektive Optiken ausgeführt sind.

Die grafische Darstellung der Figur 5 soll den Absorptionsgrad von Laserstrahlung mit den Wellenlängen 1µm und 10µm als Funktion des Einfallswinkels darstellen, wobei diese Einfallswinkel beispielhaft für Stahlwerkstoffe gerechnet sind. Die Einfallswinkel wurden hierbei von 0°, d. h. senkrechter Einfall der Strahlung, bis 90°, d. h. streifender Einfall der Strahlung, aufgetragen. Anhand dieser Grafik wird deutlich, dass die Absorption bei großen Einfallswinkeln rechts vom Hauptabsorptionsmaximum besonders klein wird und dass die Änderung der Absorption bei sich änderndem Einfallswinkel dort besonders groß wird. Dieser Effekt kann zu geringen Wirkungsgraden und zu einem instabilen Prozessverhalten führen.

Anhand der Figuren 6 und 7 nun sind Möglichkeiten zur Einstellung von Einfallswinkeln nahe dem Hauptabsorptionsmaximum angegeben.

Figur 6 zeigt zwei unterschiedliche Laserstrahlungen 23, 24, die auf die Wechselwirkungsfläche 25 eines Werkstücks bzw. Materials 26, das in dem gezeigten Beispiel ein Blech mit einer Dicke von 4 mm ist, auftrifft. Die Darstellung ist nur als stark vereinfachende Prinzipskizze zu verstehen. So ist die Kontur der Wechselwirkungsfläche im allgemeinen nichtlinear und es treffen viele Teilstrahlen mit unterschiedlichen Poyntingvektoren, d.h. unterschiedlichen Leistungsdichten und Strahlrichtungen bzw. Divergenzwinkeln, die zu unterschiedlichen Einfallswinkeln führen, auf die Wechselwirkungsfläche. Bei der Laserstrahlung 23, wobei nur ein Strahl bzw. die Strahlachse dargestellt ist, handelt es sich um eine 10µm-Laserstrahlung ohne Strahldivergenz, die unter einem Einfallswinkel von 87° auf die Wechselwirkungsfläche 25 auftreffen soll. Dies erfordert eine steile, schmale Wechselwirkungsfläche von 200µm, die mit dem Bezugszeichen 27 bezeichnet ist, um das Hauptabsorptionsmaximum entsprechend Figur 5 zu erreichen. Bei der Laserstrahlung 24 handelt es sich um eine 1µm-Laserstrahlung ohne Strahldivergenz, die unter einem Einfallswinkel von 78° auf die Wechselwirkungsfläche 25 auftreffen soll. Dies erfordert eine flachere, breitere Wechselwirkungsfläche, verglichen mit der 10µm-Laserstrahlung, von 900µm, die mit dem Bezugszeichen 28 bezeichnet ist, um den kleinen Einfallswinkel des Hauptabsorptionsmaximums entsprechend Figur 5 zu erreichen.

Im Vergleich zu Figur 6 zeigt Figur 7 ein Werkstück bzw. Material mit einer Blechdicke von 4 mm, auf dessen Wechselwirkungsfläche 25 1µm-Laserstrahlung 29 unter einem Einfallswinkel von 78° mit einer Strahldivergenz von 12° einfällt. Es ergibt sich somit eine steile, schmale Wechselwirkungsfläche und trotzdem wird der kleinere Einfallswinkel des Hauptabsorptionsmaximums entsprechend Figur 5 erreicht. Durch die divergenten Strahlungsanteile (aufgrund der Strahldivergenz von 12° in dem Beispiel der Figur 7 sind auch bei der 1µm-Laserstrahlung trotz schmaler und steiler Wechselwirkungsflächen hohe Absorptionsgrade erreichbar mit einer stabilen Prozessführung und einer guten, erzielbaren Bearbeitungsqualität.

## Patentansprüche

1. Verfahren zur Materialbearbeitung mit Laserstrahlung, bei dem die unfokussierte Laserstrahlung durch eine Fokussieroptik auf einen kleineren Strahlquerschnitt fokussiert wird, die optische Achse der fokussierten Laserstrahlung, als Strahlachse bezeichnet, auf die Materialoberfläche gerichtet wird, die aus der Fokussierung resultierende Strahltaille der fokussierten Laserstrahlung im Bereich der sich ausbildenden Wechselwirkungsfläche von Laserstrahlung und Material gehalten wird, die Laserstrahlung auf der Wechselwirkungsfläche teilweise absorbiert wird, so dass die Wechselwirkungsfläche durch induzierten Materialabtrag oder induzierte Materialverdrängung und damit auch die Laserstrahlung in das Material eindringt, wobei der Abstand der Strahltaille von der Ober- oder Unterseite der Wechselwirkungsfläche in axialer Richtung maximal dem dreifachen Wert der Eindringtiefe der Wechselwirkungsfläche in das Material entspricht, **dadurch gekennzeichnet, dass** die Fokussierung derart erfolgt, dass Anteile der Laserstrahlung in einem Bereich in Ausbreitungsrichtung gesehen beginnend bereits vor der Strahltaille bis zu einem Bereich nach der Strahltaille divergent gemacht und somit von der Strahlachse weg gerichtet werden, und dass diese Anteile und Divergenzwinkel größer als diejenigen der Auswirkungen von Abbildungsfehlern sind, die mit Standardoptiken unbeabsichtigt entstehen und in Kauf genommen werden, wobei die größeren Divergenzwinkel der Strahlungsanteile zur Verkleinerung ihrer Einfallswinkel auf der Wechselwirkungsfläche und damit zur Erhöhung der Absorption der Strahlungsanteile auf der Wechselwirkungsfläche und zur Reduzierung der Änderung der Absorption bei Einfallswinkelschwankungen genutzt werden, und dass die größeren Divergenzwinkel der Strahlungsanteile laserintern oder laserextern mit mindestens einer strahlformenden Optik erzeugt werden, und dass die größeren Divergenzwinkel der Strahlungsanteile erzeugt werden, indem der Betrag einer Aberration in der strahlformenden Optik vergrößert wird.

2. Verfahren nach Anspruch 1, **dadurch gekennzeichnet, dass** positive und/oder negative sphärische Aberrationen und/oder chromatische Aberrationen erzeugt oder betragsmäßig vergrößert werden.

3. Verfahren nach Anspruch 1 oder 2, **dadurch gekennzeichnet, dass** eine Aberration in der Optik dadurch erreicht wird, dass diffraktive, refraktive und/oder diffusive optische Elemente eingesetzt werden

4. Verfahren nach einem der Ansprüche 1 bis 3, **dadurch gekennzeichnet, dass** eine Aberration in der Optik dadurch erreicht wird, dass die Kombination aus mindestens einer konkaven und einer konvexen optischen Grenzfläche eingesetzt wird.

5. Verfahren nach einem der Ansprüche 1 bis 4, **dadurch gekennzeichnet, dass** eine Aberration in der Optik dadurch erreicht wird, dass mindestens ein optisches Element mit mindestens einer asphärischen Fläche eingesetzt wird.

6. Verfahren nach Anspruch 5, **dadurch gekennzeichnet, dass** das optische Element als Axikon oder als Fresneloptik ausgeführt wird.

7. Verfahren nach einem der Ansprüche 1 bis 6, **dadurch gekennzeichnet, dass** die strahlformende Optik als adaptive Optik derart ausgeführt wird, dass der Betrag und/oder die laterale und/oder axiale Verteilung der Aberration einstellbar sind.

8. Verfahren nach einem der Ansprüche 1 bis 7, **dadurch gekennzeichnet, dass** die größeren Divergenzwinkel der Strahlungsanteile genutzt werden, um definierte räumliche Leistungsdichteverteilungen, wie Ringverteilungen oder Tophatvertei lungen, im Bereich der Wechselwirkungsfläche zu erzeugen.

9. Vorrichtung zur Materialbearbeitung mit mindestens einer Laserstrahlquelle und einer die Laserstrahlung der Laserstrahlquelle fokussierende Fokussieroptik, wobei die optische Achse der fokussierten Laserstrahlung, als Strahlachse bezeichnet, auf eine Bearbeitungsebene gerichtet ist, wobei die aus der Fokussierung resultierende Strahltaille der fokussierten Laserstrahlung im Bereich der sich ausbildenden Wechselwirkungsfläche von Laserstrahlung und zu bearbeitendem Material gehalten ist, und mit Einrichtungen, um die aus der Fokussierung resultierende Strahltaille der fokussierten Laserstrahlung im Bereich der sich ausbildenden Wechselwirkungsfläche von Laserstrahlung und Material zu halten, **dadurch gekennzeichnet, dass** die Fokussieroptik und mindestens eine strahlformende Optik derart ausgelegt sind, dass Anteile der Laserstrahlung in einem Bereich in Ausbreitungsrichtung gesehen beginnend bereits vor der Strahltaille bis zu einem Bereich nach der Strahltaille divergent und somit von der Strahlachse weg gerichtet sind, und derart, dass diese Anteile und Divergenzwinkel größer als diejenigen der Auswirkungen von Abbildungsfehlern sind, die mit Standardoptiken unbeabsichtigt entstehen und in Kauf genommen werden, und dass die größeren Divergenzwinkel der Strahlungsanteile laserintern oder laserextern mit der strahlformenden Optik erzeugt werden, und dass die größeren Divergenzwinkel der Strahlungsanteile erzeugt werden, indem der Betrag einer Aberration in der strahlformenden Optik vergrößert wird.

10. Vorrichtung nach Anspruch 9, **dadurch gekennzeichnet, dass** diffraktive, refraktive und/oder diffusive optische Elemente zum Erreichen einer Aberration in der Optik eingesetzt sind.

11. Vorrichtung nach Anspruch 9 oder 10, **dadurch gekennzeichnet, dass** die strahlformende Optik als adaptive Optik, mittels der der Betrag und/oder die laterale und/oder axiale Verteilung der Aberration einstellbar sind, ausgeführt ist.

12. Vorrichtung nach einem der Ansprüche 9 bis 11, **dadurch gekennzeichnet, dass** als strahlformende Optik eine Einrichtung vorgesehen ist, die die größeren Divergenzwinkel der Strahlungsanteile so einstellt, dass definierte räumliche Leistungsdichteverteilungen wie Ringverteilungen oder Tophat-Verteilungen im Bereich der Wechselwirkungsfläche erzeugt werden.

## Claims

1. Method for machining material using laser radiation, wherein the unfocused laser radiation is focused through a focusing optics to a smaller beam cross-section, the optical axis of the focused laser radiation, called beam axis, is directed at the material surface, the beam waist, which results from the focusing operation, of the focused laser radiation is held in the region of the evolving interaction surface of laser radiation and material, the laser radiation is partially absorbed on the interaction surface such that due to induced material removal or induced material displacement the interaction surface and thus also the laser radiation penetrate into the material, wherein the spacing of the beam waist from the upper or lower side of the interaction surface in axial direction corresponds at most to three times the value of the penetration depth of the interaction surface into the material, **characterized in that** the focusing operation is carried out such that components of the laser radiation are made divergent in a region viewed in the propagation direction beginning already before the beam waist up to a region after the beam waist and are thus directed away from the beam axis, and that said components and angles of divergence are greater than those of the effects of imaging errors, which are inadvertently produced using standard optics and are accepted, wherein the greater divergent angles of the beam components are used for reducing their incident angles on the interaction surface and thus for increasing the absorption of the radiation components on the interaction surface and for reducing the change in the absorption at fluctuations in the incident angles, and that the greater divergent angles of the radiation components are generated laser-internal or laser-external using at least one beam-shaping optics, and that the greater divergent angles of the radiation components are generated by increasing the amount of aberration in the beam-shaping optics.

2. Method according to claim 1, **characterized in that** positive and/or negative spherical aberrations and/or chromatic aberrations are created or their value is increased.

3. Method according to claim 1 or 2, **characterized in that** an aberration in the optics is achieved by using diffractive, refractive and/or diffuse optical elements.

4. Method according to one of claims 1 to 3, **characterized in that** an aberration in the optics is achieved by using the combination of at least one concave and one convex optical interface.

5. Method according to one of claims 1 to 4, **characterized in that** an aberration in the optics is achieved by using at least one optical element with at least one aspherical surface.

6. Method according to claim 5, **characterized in that** the optical element is designed as an axicon or as a Fresnel optics.

7. Method according to one of claims 1 to 6, **characterized in that** the beam-shaping optics is designed as an adaptive optics such that the amount and/or the lateral and/or the axial distribution of the aberration is adjustable.

8. Method according to one of claims 1 to 7, **characterized in that** the greater divergent angles of the radiation components are used to create defined spatial power density distributions, such as ring distributions or top-hat distributions, in the region of the interaction surface.

9. Device for machining material with at least one laser beam source and one focusing optics that focuses the laser radiation of the laser beam source, wherein the optical axis of the focused laser radiation, called beam axis, is directed to a machining plane, wherein the beam waist, which results from the focusing operation, of the focused laser radiation is held in the region of the evolving interaction surface of laser radiation and material to be machined, and with devices for holding the beam waist, which results from the focusing operation, of the focused laser radiation in the region of the evolving interaction surface of laser radiation and material, **characterized in that** the focusing optics and at least a beam-shaping optics are designed such that portions of the laser radiation are divergent in a region viewed in propagation direction beginning already before the beam waist up to a region after the beam waist and are thus directed away from the beam axis, and such that said portions and divergent angles are greater than those of the effects of imaging errors that occur inadvertently with standard optics and are accepted, and that the greater divergent angles of the radiation components are created laser-internal or laser-external with the beam-shaping optics, and that the greater divergent angles of the radiation components are created by increasing the amount of an aberration in the beam-shaping optics.

10. Device according to claim 9, **characterized in that** diffractive, refractive and/or diffuse optical elements are used to achieve an aberration in the optics.

11. Device according to claim 9 or 10, **characterized in that** the beam-shaping optics is designed as an adaptive optics by means of which at least the amount and/or the lateral and/or the axial distribution of the aberration are adjustable.

12. Device according to one of claims 9 to 11, **characterized in that** a device is provided as the beam-shaping optics that adjusts the greater divergent angles of the radiation components to create defined spatial power density distributions such as ring distributions or top-hat distributions in the region of the interaction surface.

## Revendications

1. Procédé d'usinage de matériau par rayonnement laser, selon lequel le rayonnement laser non focalisé est focalisé par une optique de focalisation à une section transversale de rayon plus petite, l'axe optique du rayonnement laser focalisé, désigné par axe de faisceau, est dirigé sur la surface de matériau, la gorge de faisceau du rayonnement laser focalisé, résultant de la focalisation, est maintenue dans la zone de la surface d'interaction se formant du rayonnement laser et du matériau, le rayonnement laser est absorbé en partie sur la surface d'interaction, de sorte que la surface d'interaction, et avec elle également le rayonnement laser, pénètre dans le matériau du fait de l'enlèvement de matériau induit ou du déplacement de matériau induit, dans lequel l'écart entre la gorge de faisceau et la face supérieure ou inférieure de la surface d'interaction dans la direction axiale correspond au maximum à trois fois la valeur de la profondeur de pénétration de la surface d'interaction dans le matériau, **caractérisé en ce que** la focalisation s'effectue de telle sorte que des parties du rayonnement laser sont rendues divergentes dans une zone, vue dans le sens de propagation, commençant déjà avant la gorge de faisceau jusqu'à une zone après la taille de faisceau et ainsi sont dirigées à distance de l'axe de faisceau, et **en ce que** ces parties et angles de divergence sont supérieurs à ceux des effets résultant de défauts d'image, qui sont produits de manière intempestive et acceptés avec des optiques standards, dans lequel les angles de divergence supérieurs des parties de rayonnement sont utilisés pour réduire leurs angles d'incidence sur la surface d'interaction et ainsi pour augmenter l'absorption des parties de rayonnement sur la surface d'interaction et pour réduire la variation de l'absorption lors de fluctuations d'angles d'incidence, et
**en ce que** les angles de divergence supérieurs des parties de rayonnement sont produits à l'intérieur du laser ou à l'extérieur du laser avec au moins une optique de formation de faisceau,
et **en ce que** les angles de divergence supérieurs des parties de rayonnement sont produits par augmentation de la grandeur d'une aberration dans l'optique de formation de faisceau.

2. Procédé selon la revendication 1, **caractérisé en ce que** des aberrations sphériques positives et/ou négatives et/ou des aberrations chromatiques sont produites ou augmentées en termes de grandeur.

3. Procédé selon la revendication 1 ou 2, **caractérisé en ce qu'**une aberration dans l'optique est obtenue du fait que des éléments optiques diffractifs, réfractifs et/ou diffusifs sont utilisés.

4. Procédé selon l'une quelconque des revendications 1 à 3, **caractérisé en ce qu'**une aberration dans l'optique est obtenue du fait que la combinaison d'au moins une surface limite optique concave et d'une surface limite convexe est utilisée.

5. Procédé selon l'une quelconque des revendications 1 à 4, **caractérisé en ce qu'**une aberration dans l'optique est obtenue du fait qu'au moins un élément optique avec au moins une surface asphérique est utilisé.

6. Procédé selon la revendication 5, **caractérisé en ce que** l'élément optique est réalisé sous la forme d'axicon ou d'optique de Fresnel.

7. Procédé selon l'une quelconque des revendications 1 à 6, **caractérisé en ce que** l'optique de formation de faisceau est réalisée sous la forme d'optique adaptative, de telle sorte que la grandeur et/ou la répartition latérale et/ou axiale de l'aberration sont réglables.

8. Procédé selon l'une quelconque des revendications 1 à 7, **caractérisé en ce que** les angles de divergence supérieurs des parties de rayonnement sont utilisés, afin de produire des densités de puissance spatiales définies, telles que des répartitions en anneau ou des répartitions en chapeau haut-de-forme, dans la zone de la surface d'interaction.

9. Dispositif d'usinage de matériau avec au moins une source de faisceau laser et une optique de focalisation focalisant le rayonnement laser de la source de faisceau laser, dans lequel l'axe optique du rayonnement laser focalisé, désigné par axe de faisceau, est dirigé sur un plan d'usinage, dans lequel la gorge de faisceau, résultant de la focalisation, du rayonnement laser focalisé est maintenue dans la zone de la surface d'interaction se formant du rayonnement laser et du matériau à usiner, et avec des équipements, afin de maintenir la gorge de faisceau, résultant de la focalisation, du rayonnement laser focalisé dans la zone de la surface d'interaction se formant du rayonnement laser et du matériau, **caractérisé en ce que** l'optique de focalisation et au moins une optique de formation de faisceau sont conçues de telle sorte que des parties du rayonnement laser sont divergentes dans une zone, vue dans le sens de propagation, commençant déjà avant la gorge de faisceau jusqu'à une zone après la gorge de faisceau et ainsi sont dirigées à distance de l'axe de faisceau, et de telle sorte que ces parties et angles de divergence sont supérieurs à ceux des effets résultant de défauts d'image, qui sont produits de manière intempestive et acceptés avec des optiques standards, et que les angles de divergence supérieurs des parties de rayonnement sont produits à l'intérieur du laser ou à l'extérieur du laser avec l'optique de formation de faisceau, et que les angles de divergence supérieurs des parties de rayonnement sont produits par augmentation de la grandeur d'une aberration dans l'optique de formation de faisceau.

10. Dispositif selon la revendication 9,
**caractérisé en ce que** des éléments optiques diffractifs, réfractifs et/ou diffusifs sont utilisés pour obtenir une aberration dans l'optique.

11. Dispositif selon la revendication 9 ou 10, **caractérisé en ce que** l'optique de formation de faisceau est réalisée sous la forme d'optique adaptative, au moyen de laquelle la grandeur et/ou la répartition latérale et/ou axiale de l'aberration sont réglables.

12. Dispositif selon l'une quelconque des revendications 9 à 11, **caractérisé en ce qu'**un appareil, qui règle les angles de divergence supérieurs des parties de rayonnement, de sorte que des répartitions de densité de puissance spatiales définies telles que des répartitions annulaires ou des répartitions en chapeau haut-de-forme sont produites dans la zone de la surface d'interaction, est prévu en tant qu'optique de formation de faisceau.
